# DEMANDE DE BREVET EUROPEEN

(11) **EP 1 172 395 A1**
(43) Date de publication de la demande: **16.01.2002**
(21) Numéro de dépôt: 01401788.3
(22) Date de dépôt: 04.07.2001
(51) Int. Cl.: C08G 63/91, C08L 67/08

(54) **Procédé d'obtention de compositions polymérisables d'enduction ou de moulage**

(30) Priorité: 10.07.2000 FR 0008983
(71) Demandeur: Vandeputte Oleochemicals, 7700 Mouscron (BE)
(72) Inventeur: Rasolovoahangy, Mpan, 02100 Saint Quentin (FR); Baudoin, Pierre-Marie, 7700 Mouscron (BE)
(74) Mandataire: Geismar, Thierry

(57) **Abrégé**

L'invention concerne un procédé d'obtention de compositions polymérisables d'enduction ou de moulage.

Ce procédé comprend les étapes consistant à
1) préparer un dérivé d'huile végétale en faisant réagir un diénophile sur les triglycérides insaturés d'au moins une huile végétale de manière à fonctionnaliser au moins une partie des doubles liaisons des triglycérides ; et
2) additionner au produit de réaction obtenu à l'étape 1) au moins un composé de polycondensation choisi dans le groupe comprenant les polyols, les époxydes et les diamines, et comportant au moins deux groupes fonctionnels aptes à se lier chacun à une des double liaisons fonctionnalisées dudit produit de réaction.

Application notamment à la fabrication de tapis d'habitacle thermoformables pour véhicules automobiles.

## Description

La présente invention concerne un procédé d'obtention de compositions polymérisables d'enduction ou de moulage.

Les domaines d'utilisation des compositions polymérisables d'enduction ou de moulage sont pratiquement illimités.

A titre d'exemple, on connaît dans le domaine automobile des panneaux insonorisants dans lesquels on associe une plaque massive à un support en mousse pour isoler l'habitacle d'un véhicule de l'environnement extérieur. A l'intérieur de l'habitacle, ces panneaux peuvent se présenter sous la forme de tapis pour isoler les occupants des bruits provoqués par le roulement du véhicule sur la chaussée. On en dispose également derrière la planche de bord pour atténuer le bruit occasionné par le moteur et la boîte de vitesse.

Ces panneaux sont actuellement réalisés sous la forme d'une plaque massive en matière plastique de densité élevée généralement appelée masse lourde, ou encore septum, associée à un support en mousse. Cet ensemble se comporte vis à vis des vibrations du plancher métallique de l'habitacle ou du tablier séparant cet habitacle du compartiment moteur, comme un ressort, la mousse, associé à une pièce d'inertie, la plaque massive. Il en résulte une isolation acoustique et donc un effet de réduction du bruit.

Les plaques massives ont été couramment réalisées jusqu'à présent sous la forme d'un enduit en plastisol chargé appliqué au dos d'une moquette. Un tel plastisol est composé d'un mélange de PVC et de plastifiant.

Ce procédé présente comme inconvénient majeur d'utiliser du PVC, c'est-à-dire un produit à base de chlore, dont le recyclage est particulièrement délicat.

Bien entendu, ce problème de recyclage se pose pour tout produit réalisé en PVC, qu'il soit obtenu par enduction ou par moulage.

Un autre inconvénient des matériaux à base de PVC réside dans l'utilisation nécessaire de plastifiant pour leur mise en oeuvre. Ces plastifiants ont pour conséquence, outre leur coût qui s'ajoute à celui du matériau proprement dit, de nécessiter des précautions particulières lors de la cuisson que l'on fait subir aux matériaux en vue de leur gélification, étant donné leur évaporation.

Par ailleurs, les plastifiants des PVC ont des masses moléculaires faibles. Ils s'évaporent donc facilement sous l'effet de la chaleur, pour se déposer ensuite sur des surfaces froides. Il en résulte le problème connu sous le nom de *"fogging",* qui se traduit par exemple dans le domaine automobile par une opacification des surfaces vitrées.

La présente invention vise à pallier ces inconvénients.

Plus particulièrement, l'invention a pour but de fournir une composition susceptible d'être enduite ou moulée, dans la composition de laquelle n'entre pas de chlore.

L'invention a également pour but de fournir un procédé pour l'obtention d'une telle composition qui ne nécessite pas l'utilisation de solvants.

L'invention a également pour but de fournir une telle composition qui, après polymérisation, ne soit pas sujette au problème de *fogging.*

L'invention a également pour but de fournir une composition susceptible d'être utilisée comme produit d'enduction à l'état de monomères, dont la polymérisation intervient lors d'une étape ultérieure.

A cet effet, l'invention a tout d'abord pour objet un procédé d'obtention de compositions polymérisables d'enduction ou de moulage, caractérisé par le fait qu'il comprend les étapes consistant à
1) préparer un dérivé d'huile végétale en faisant réagir au moins un diénophile sur les triglycérides insaturés d'au moins une huile végétale de manière à fonctionnaliser au moins une partie des doubles liaisons des triglycérides ; et
2) additionner au produit de réaction obtenu à l'étape 1) au moins un composé de polycondensation choisi dans le groupe comprenant les polyols, les époxydes et les diamines, et comportant au moins deux groupes fonctionnels aptes à se lier chacun à une des fonctions dudit produit de réaction.

Les huiles végétales, par exemple les huiles de lin, de soja, de colza, de coton, de tung, sont des corps gras formés de mélanges de triglycérides. Les triglycérides ont pour formule générale : 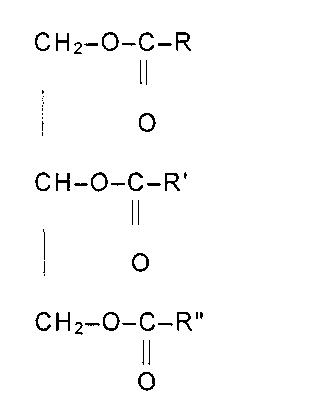 dans laquelle les radicaux R, R' et R" sont des radicaux généralement différents provenant pour l'essentiel d'acides gras aliphatiques insaturés.

Dans le cas présent, on préférera des triglycérides d'acides gras ayant au moins 12 atomes de carbone, et de préférence de 14 à 20 atomes de carbone, et notamment les triglycérides provenant des acides gras suivants :
acide palmitique : CH₃-(CH₂)₁₄-COOH
acide stéarique : CH₃-(CH₂)₁₆-COOH
acide oléique : CH₃-(CH₂)₇-CH=CH-(CH₂)₇-COOH
acide linoléique : CH₃-(CH₂)₄-(CH=CH-CH₂)₂-(CH₂)₆-COOH
acide linolénique : CH₃-CH₂-(CH=CH-CH₂)₃-(CH₂)₆-COOH

A titre d'exemple, les huiles de soja, de colza et de lin sont composées, en poids, de la manière suivante :

**TABLEAU 1**

| | Acide palmitique | Acide Stéarique | Acide Oléique | Acide Linoléique | Acide Linolénique | Autres |
|---|---|---|---|---|---|---|
| Soja | 8 | 4 | 28 | 53 | 7 | 7 |
| Colza | 4 | 1 | 60 | 20 | 10 | 15 |
| Lin | 5 | 3 | 20 | 14. | 58 | - |

L'huile de lin est constituée essentiellement d'acide linolénique (3 insaturations) et d'acide linoléique (2 insaturations). En moyenne, l'huile de lin contient 7 insaturations par molécule de triglycéride.

L'huile de soja est constituée essentiellement d'acide linoléique (2 insaturations) et d'acide oléique (1 insaturation). En moyenne, l'huile de soja contient 5 insaturations par molécule de triglycéride.

L'huile de colza est constituée essentiellement d'acide oléique (1 insaturation) et d'acide linoléique (2 insaturations). En moyenne, l'huile de colza contient 4 insaturations par molécule de triglycéride.

Par conséquent, si toute huile végétale peut être utilisée, l'huile de lin sera préférée dans la mesure où elle possède le plus grand nombre de doubles liaisons susceptibles d'être fonctionnalisées.

La fonctionnalisation de l'étape 1) par réaction du diénophile sur les triglycérides s'opère selon trois réactions possibles. Dans le premier cas, le diénophile réagit avec les doubles liaisons des acides gras insaturés composant les triglycérides et se fixe en α de la double liaison. Le diénophile peut également réagir avec les doubles liaisons activées en diènes conjugués (réaction de Diels-Alder). Enfin, la troisième réaction est une standolisation caractérisée par la création d'un pont carbone-carbone entre les carbones des doubles liaisons d'un acide gras insaturé sur un autre acide gras insaturé composant le triglycéride.

Les huiles végétales peuvent être utilisées dans le procédé selon l'invention à l'état raffiné ou non.

La composition obtenue par le procédé selon l'invention est dépourvue de chlore, ce qui limite dans une large mesure les difficultés liées à son recyclage.

Par ailleurs, les matières premières utilisées, à savoir essentiellement des huiles végétales, sont renouvelables.

Enfin, les molécules des huiles végétales sont suffisamment lourdes pour être peu volatiles, et ne pas présenter de grandes difficultés de mise en oeuvre, en particulier lors de l'étape de polymérisation.

Dans un mode de mise en oeuvre particulier de l'invention, le diénophile est choisi dans le groupe comprenant les acides et anhydrides maléiques, acryliques et méthacryliques.

Plus particulièrement, le diénophile peut être l'anhydride maléique, dont l'utilisation est bien connue dans la fabrication des résines polyester.

Egalement dans un mode de mise en oeuvre particulier de l'invention, un composé de polycondensation susceptible d'être utilisé, seul ou en combinaison avec d'autres, est un diol de masse moléculaire comprise entre 50 et 4000, plus particulièrement entre 600 et 1500.

Des diols convenables sont par exemple le monoéthylèneglycol, le propylèneglycol, le diéthylèneglycol, ou plus généralement un polyéthylèneglycol de masse moléculaire convenable.

Dans un autre mode de mise en oeuvre particulier de l'invention, un composé de polycondensation susceptible d'être utilisé, seul ou en combinaison avec d'autres, est un triol de masse moléculaire comprise entre 90 et 6000.

Peuvent par exemple convenir à titre de triols, la glycérine ou un polymère de masse convenable d'oxyde de propylène et d'oxyde d'éthylène.

Dans un autre mode de mise en oeuvre particulier de l'invention, un composé de polycondensation susceptible d'être utilisé, seul ou en combinaison avec d'autres, est un dérivé époxydé comportant 1 à 6% de fonction époxyde et ayant entre 10 et 60 atomes de carbone.

Ce dérivé époxydé peut être une huile de soja ou de lin époxydée.

Peuvent également convenir des époxyesters aliphatiques ou ramifiés de masse moléculaire de l'ordre de 300 à 500, ainsi que des éthers aliphatiques de masse moléculaire de l'ordre de 800 à 1000 et des alkyldiamines de masse moléculaire de l'ordre de 60 à 200.

Le produit de réaction obtenu à l'étape 1) et le composé de polycondensation peuvent être additionnés sans solvant.

On élimine donc dans ce cas les difficultés liées à la présence de plastifiant dans les matériaux à base de PVC.

L'invention a également pour objet une composition de moulage polymérisable, caractérisée par le fait qu'elle comprend un mélange de viscosité comprise entre 2 Pa.s et 5 Pa.s, comportant au moins :
- un dérivé d'huile végétale dont les triglycérides ont au moins une partie de leurs doubles liaisons fonctionnalisées par au moins un diénophile ; et
- au moins un composé de polycondensation choisi dans le groupe comprenant les polyols, les époxydes et les diamines, et comportant au moins deux groupes fonctionnels aptes à se lier chacun à une des doubles liaisons fonctionnalisées dudit dérivé.

L'invention a également pour objet une composition d'enduction polymérisable, caractérisée par le fait qu'elle comprend un mélange de viscosité comprise entre 2 Pa.s et 5 Pa.s, comportant au moins :
- un dérivé d'huile végétale dont les triglycérides ont au moins une partie de leurs doubles liaisons fonctionnalisées par au moins un diénophile ; et
- au moins un composé de polycondensation choisi dans le groupe comprenant les polyols, les époxydes et les diamines, et comportant au moins deux groupes fonctionnels aptes à se lier chacun à une des doubles liaisons fonctionnalisées dudit dérivé.

Selon la stoechiométrie retenue, le polymère résultant de la polycondensation pourra aller d'un thermoplastique à un thermodurcissable.

Plus particulièrement, cette composition peut comprendre en outre une charge.

A titre d'exemple, le produit d'enduction peut comporter de 50% à 90% en poids d'une charge minérale ou autre telle que la baryte, le carbonate de calcium, ainsi que d'un mélange de charges.

Bien entendu, d'autres additifs peuvent être ajoutés.

On peut en particulier prévoir un antioxydant tel que le 2,2'-méthyl-6-tert-butylphénol, le mélange alkyl et aralkyl-phénol substitué, ou le N,N'-di(1,4-dimethylpentylène-diamine).

On peut également prévoir un catalyseur tel que l'octoate stanneux, l'octoate de calcium, l'octoate de zirconium, l'acide paratoluènesulfonique, l'acide méthanesulfonique, l'acide dodécylbenzènesulfonique, ou l'imidazole.

L'invention a également pour objet un procédé de mise en oeuvre d'une composition telle que décrite ci-dessus, caractérisé par le fait qu'il comprend les étapes consistant à enduire un support d'enduction, notamment textile, à l'aide de cette composition, et à polymériser ladite composition par cuisson.

La cuisson peut notamment être effectuée par rayonnement infrarouge.

Un tel procédé de cuisson est notamment facilité par le fait que la composition polymérisable ne comporte pas de solvant ni de plastifiants volatiles.

L'invention a également pour objet un tapis d'habitacle thermoformable pour véhicule automobile, obtenu par un tel procédé.

On décrira maintenant des exemples de mise en oeuvre de l'invention.

### Préparation des dérivés d'huile végétale

On décrira à titre d'exemple la préparation d'un dérivé d'huile de lin (brute ou raffinée) et d'anhydride maléïque.

Dans un ballon, on charge 2000g (2,27mol.) d'huile de lin (huile de lin raffinée ou huile de lin brute). On chauffe l'huile à 150°C sous agitation et sous atmosphère d'azote. On additionne une certaine quantité d'anhydride maléïque par petite quantité d'environ 3% environ toutes les 2 minutes.

Quand tout l'anhydride est ajouté, la température est élevée à 200°C. Une fois la température atteinte on élève la température à 210°C. Une fois cette température atteinte on élève à 215°C et enfin une fois cette température atteinte on élève la température à 220°C.

On contrôle par la réaction de l'aniline que tout l'anhydride a réagi. Après 90 minutes la réaction est arrêtée.

Le tableau ci-dessous donne la viscosité de l'huile de lin maléinisée obtenue pour trois dosages de l'anhydride maléïque.

**TABLEAU 2**

| HL 2000g ↓ | AM → | 400,45g (4,08mol.) | 444,94g (4,54mol.) | 489,44g (4,99mol.) |
|---|---|---|---|---|
| Brute | | 2 à 3 Pa.s | 4 à 6 Pa.s | 14 à 16 Pa.s |
| Raffinée | | 3 à 4 Pa.s | 6 à 8 Pa.s | 19 à 21 Pa.s |

On constate que la viscosité est plus faible pour de l'huile de lin brute que pour de l'huile de lin raffinée, et qu'elle croît avec la concentration en anhydride maléïque.

### Préparation de la composition polymérisable

On utilise comme huile fonctionnalisée le dérivé 2 d'huile de lin raffinée obtenu ci-dessus avec 444,94g d'anhydride maléïque.

### a) A partir de polyols

- Formulation 1
   On introduit dans un bécher et on mélange les composés suivants :
   43,5g Dérivé 2 + 7,4g Polyéthylèneglycol (M=600g/mol) + 49,1g Triol (M=6000g/mol) + 1,5g catalyseur (octoate stanneux )⁺ 0,5g antioxydant
   La viscosité du mélange est de l'ordre de 2,5 Pa.s.
- Formulation 2
   On procède comme pour la formulation 1 avec les quantités suivantes :
   49g Dérivé 2 + 49g Triol (M=6000g/mol) + 1g catalyseur (octoate stanneux ) + 1g antioxydant
   La viscosité du mélange est de l'ordre de 3 Pa.s.
- Formulation 3
   On procède comme pour les formulations 1 et 2 avec les quantités suivantes :
   36g Dérivé 2 + 64g Triol (M=4800g/mol) + 1,5g catalyseur (octoate stanneux ) + 0,5g antioxydant
   La viscosité du mélange est de l'ordre de 3 Pa.s.
- Formulation 4
   On procède comme pour les formulations 1 à 3 avec les quantités suivantes :
   36g Dérivé 2 + 60g Triol (M=6000g/mol) + 4g dérivé époxydé Sovermol 1085 + 1,5g catalyseur (octoate stanneux ) + 0,5g antioxydant
   La viscosité du mélange est de l'ordre de **4** Pa.s.

### b) A partir d'huile de soja époxydée

- Formulation 5
   On procède comme pour les formulations 1 à 4 avec les quantités suivantes :
   81g Dérivé 2 + 18g dérivé époxy (huile de soja époxydée) + 1g catalyseur (octoate stanneux)

### Polymérisation

Les mélanges ci-dessus (100g) additionnés de 400g de sulfate de baryum, soit 80% en poids, ont été mis en forme de plaques de 4kg/m². Les échantillons ont été placés dans un four infrarouge d'une puissance de 30 kW/m² pendant une durée de l'ordre de 5 minutes.

La formulation 5 a donné un polymère fortement réticulé, cassant et peu souple. Les formulations 1 et 2 ont donné des polymères de caractéristiques mécaniques suivantes

**TABLEAU 3**

| | Formulation 1 | Formulation 2 | Formulation 3 | Formulation 4 |
|---|---|---|---|---|
| Allongement à la rupture (%) | 40 | 110 | 50 | 94 à 140 |
| Charge maximum (N) | 2,9 | 1,5 | 6,1 | 3,7 |

Ces essais ont été réalisés sur des éprouvettes haltères à une vitesse de 50 mm/mn.

De manière plus générale, on a pu constater que l'allongement à la rupture
- augmente avec le taux de maléinisation de l'huile à l'étape de préparation du dérivé d'huile végétale ;
- diminue avec le rapport Dérivé/Polyol, et plus précisément avec le rapport des fonctions alcools et anhydride maléïque ;
- augmente avec la masse moléculaire du triol ;
- diminue en cas de mélange du triol avec du polyéthylèneglycol ;
- diminue avec l'ajout de molécules de faible masse moléculaire.

## Revendications

1. Procédé d'obtention de compositions polymérisables d'enduction ou de moulage, **caractérisé par le fait qu'**il comprend les étapes consistant à
1) préparer un dérivé d'huile végétale en faisant réagir un diénophile sur les triglycérides insaturés d'au moins une huile végétale de manière à fonctionnaliser au moins une partie des doubles liaisons des triglycérides ; et
2) additionner au produit de réaction obtenu à l'étape 1) au moins un composé de polycondensation choisi dans le groupe comprenant les polyols, les époxydes et les diamines, et comportant au moins deux groupes fonctionnels aptes à se lier chacun à une des doubles liaisons fonctionnalisées dudit produit de réaction.

2. Procédé selon la revendication 1, dans lequel l'huile végétale est de l'huile de lin brute ou raffinée.

3. Procédé selon l'une quelconque des revendications 1 et 2, dans lequel le diénophile est choisi dans le groupe comprenant les acides et anhydrides maléiques, acryliques et méthacryliques.

4. Procédé selon la revendication 3, dans lequel le diénophile est l'anhydride maléique.

5. Procédé selon l'une quelconque des revendications 1 à 4, dans lequel un composé de polycondensation est un diol de masse moléculaire comprise entre 50 et 4000.

6. Procédé selon la revendication 5, dans lequel un composé de polycondensation est un diol de masse moléculaire comprise entre 600 et 1500.

7. Procédé selon l'une quelconque des revendications 1 à 6, dans lequel un composé de polycondensation est un triol de masse moléculaire comprise entre 90 et 6000.

8. Procédé selon l'une quelconque des revendications 1 à 7, dans lequel un composé de polycondensation est un dérivé époxydé comportant 1 à 6% de fonction époxyde et ayant entre 10 et 60 atomes de carbone.

9. Procédé selon la revendication 8, dans lequel le dérivé époxydé est une huile de soja époxydée.

10. Procédé selon l'une quelconque des revendications 5 à 9, dans lequel le produit de réaction obtenu à l'étape 1) et le composé de polycondensation sont additionnés sans solvant.

11. Composition de moulage polymérisable, **caractérisée par le fait qu'**elle comprend un mélange de viscosité comprise entre 2 Pa.s et 5 Pa.s, comportant au moins :
- un dérivé d'huile végétale dont les triglycérides ont au moins une partie de leurs doubles liaisons fonctionnalisées par au moins un diénophile ; et
- au moins un composé de polycondensation choisi dans le groupe comprenant les polyols, les époxydes et les diamines, et comportant au moins deux groupes fonctionnels aptes à se lier chacun à une des fonctions dudit dérivé.

12. Composition d'enduction polymérisable, **caractérisée par le fait qu'**elle comprend un mélange de viscosité comprise entre 2 Pa.s et 5 Pa.s, comportant au moins :
- un dérivé d'huile végétale dont les triglycérides ont au moins une partie de leurs doubles liaisons fonctionnalisées par au moins un diénophile ; et
- au moins un composé de polycondensation choisi dans le groupe comprenant les polyols, les époxydes et les diamines, et comportant au moins deux groupes fonctionnels aptes à se lier chacun à une des fonctions dudit dérivé.

13. Composition selon la revendication 12, comprenant en outre une charge.

14. Procédé de mise en oeuvre d'une composition selon l'une quelconque des revendications 12 et 13, **caractérisé par le fait qu'**il comprend les étapes consistant à enduire un support d'enduction, notamment textile, à l'aide de cette composition, et à polymériser ladite composition par cuisson.

15. Procédé selon la revendication 14, dans lequel la cuisson est effectuée par rayonnement infrarouge.

16. Tapis d'habitacle thermoformable pour véhicule automobile, **caractérisé par le fait qu'**il est obtenu par un procédé selon l'une quelconque des revendications 14 et 15.
